# EUROPEAN PATENT SPECIFICATION

(11) **EP 0 796 409 B1**
(45) Date of publication and mention of the grant of the patent: **02.05.2001**
(21) Application number: 95940393.2
(22) Date of filing: 15.12.1995
(51) Int. Cl.: F16L 58/10, F16K 27/06, B22F 7/04, F16K 5/02

(54) **IMPROVEMENTS IN OR RELATING TO VALVE OR PIPE COMPONENTS**
VERBESSERUNGEN IN ODER BEZÜGLICH ARMATUREN ODER ROHRKOMPONENTEN
AMELIORATION POUR ELEMENTS DE VANNES OU ROBINETS, OU CONCERNANT CES ELEMENTS

(30) Priority: 17.12.1994 GB 9425509
(43) Date of publication of application: 24.09.1997
(73) Proprietor: Hindle Cockburns Limited, Leeds LS11 5UG (GB)
(72) Inventor: MERRIFIELD, Robert James, Hindle Cockburns Ltd., Leeds LS11 5UG (GB)
(74) Representative: Holmes, Matthew Peter
(86) International application number: GB9502938
(87) International publication number: WO9618844

(56) References cited:
- EP-A- 0 052 205
- EP-A- 0 608 421
- US-A- 4 544 523
- PATENT ABSTRACTS OF JAPAN vol. 002 no. 048 (C-010) ,31 March 1978 & JP,A,53 008683 (HITACHI CABLE LTD) 26 January 1978,
- PATENT ABSTRACTS OF JAPAN vol. 008 no. 230 (M-333) ,23 October 1984 & JP,A,59 110704 (SHINGIJIYUTSU KAIHATSU JIGIYOUDAN;OTHERS: 01) 26 June 1984,

## Description

This invention relates to a method of lining an internal surface of a valve or pipe component, with a chemically inert material. From EP 0 052 205 A1 it is known, for example in the case of ball valves, to isolate the valve body material from the line fluid by means of a fluorocarbon liner thereby enabling the valve to be used in corrosive service conditions without the need for an expensive non-corrosive body material. Such a liner may be made of PFA (Perfluoro-Alkoxy) or FEP (Fluorinated Ethylene Propylene) both of which are compatible with PTFE (Polytetrafluoroethylene) lined piping. The liner is keyed securely to the valve by being moulded into grooves of dovetail cross section. The machining of such grooves into the valve body is a time-consuming and expensive procedure and has the further disadvantage that because of the non-stick nature of the fluorocarbon liner material the attachment of the liner is local to the grooves leading to considerable stresses at these locations. As a consequence the application of such valves, for example in vacuum and high temperature service, is limited.

It is an object of the present invention to obviate or mitigate the aforesaid disadvantages.

According to the present invention there is provided a method of lining an internal surface of a valve or pipe component comprising the steps of applying an atomised spray of sintered metal to the internal surface to be lined forming a sintered metal coating having exposed interstices and then applying to said coating a chemically inert lining material under conditions of heat and pressure such that the material is caused to penetrate said interstices so as to provide a mechanical key therefor.

Preferably the lining material is PFA or FEP.

The sintered metal is preferably nickel, bronze, steel or stainless steel.

The component may be a valve body with the surface lining provided internally thereof.

The sintered metal coating, which may be of nickel, bronze, steel or stainless steel, is preferably applied as an atomised spray and the lining material is preferably applied to said coating by a transfer, injection or isostatic moulding technique. The lining material is preferably PFA or FEP.

The invention will now be described by way of example only, in relation to the accompanying drawings, in which:-
Fig. 1 is a longitudinal section of a valve body before application of a surface lining in accordance with the invention;
Fig. 2 is a corresponding view illustrating diagrammatically the application of a sintered metal coating to the surface to be lined, with an inset showing the lining material to an enlarged scale;
Fig. 3 is a corresponding view of the fully coated valve body in a diagrammatically illustrated transfer or injection moulding machine, and
Fig. 4 is a longitudinal section of the finished valve body.

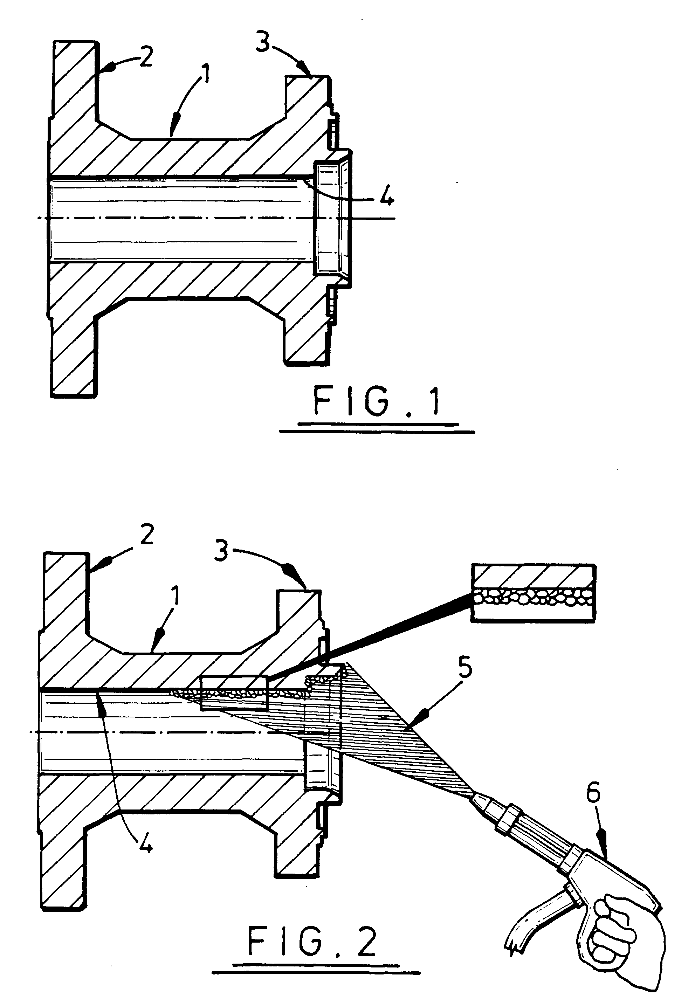

Referring now to the drawings, a valve body 1 made of cast iron or other metal has terminal flanges 2, 3 and a cylindrical through bore 4 of which the surface is to be lined with a fluorocarbon liner. As a preliminary step the bore is coated with sintered metal which may for example be nickel, bronze, steel or stainless steel. The coating is applied to the surface of the bore 4 in the form of a spray 5 from a hand-held spray gun 6 (Fig. 2). Alternatively, for repeated coating of like components the spraying process may be mechanised. The spraying technique is known and involves the melting of the raw metallic material in the form of a wire, cord or powder in an oxygen and fuel gas flame. The molten metal material is then atomised by a cone of compressed air which also serves to propel the resulting stream of metal particles towards the valve body. As is evident from the inset to Fig. 2 the metal particles fuse to the valve body material and to each other to provide a coating which has a rough exposed surface and interstitial spaces rendering the coating porous from said surface.

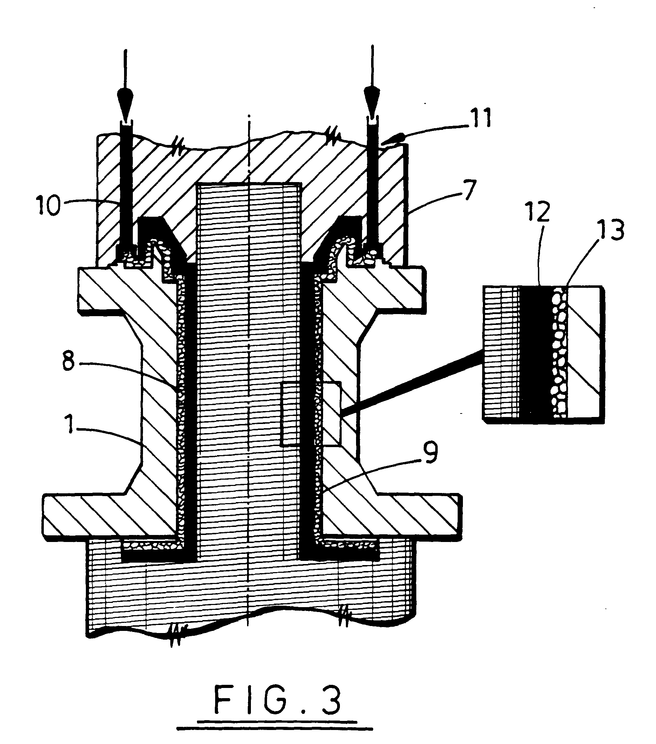

After the bore and adjacent surfaces have been fully coated as shown in Fig. 3, the valve body 1 is positioned in a transfer or injection moulding machine indicated generally at 7 and including a central core 8 defining with the valve body 1 a hollow cylindrical cavity 9 into which molten fluorocarbon lining material is injected under pressure through inlet passages 10, 11. As indicated in the inset to Fig. 3, the lining layer indicated at 12 covers the coating material 13 to a considerable depth and is caused to penetrate into the interstices of the coating material.

The fluorocarbon lining material is preferably PFA (Perfluoro-Alkoxy) or FEP (Fluorinated Ethylene Propylene). Such materials are preferred because they are compatible with PTFE (Polytetrafluoroethylene) lined pipe work. Other, non-fluorocarbon lining material may also be used provided that it can be applied under conditions of sufficient heat and pressure as to penetrate the sintered metal coating layer.

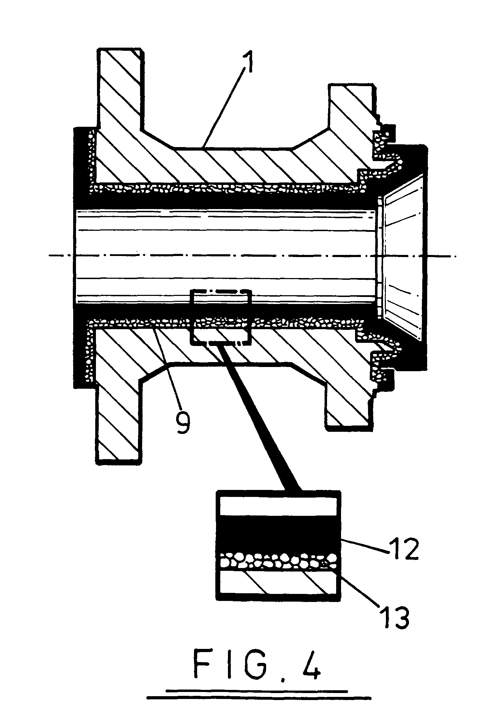

The finished valve body shown in Fig. 4 has a lining fully coterminous with the previously applied sintered metal coating material. The lining is held in position over its full extent by its penetration into interstices of the sintered metal coating layer. Such penetration therefore provides a mechanical key for the solidified liner.

With the spraying technique described above the thickness of the coating layer may be of any thickness e.g. from) 25µ (0.001 inch) upwards depending on the length of time that the spray gun is directed at the surface to be coated. The thickness of the surface liner 12 is determined by the moulding technique which is a known transfer, injection or isostatic moulding technique and hence need not be further described.

Instead of a valve body, the component to be surface lined may be any other valve or pipe component, for example a valve closure member such as a ball (for a ball valve) or disc (for a butterfly valve), a plug (for a plug valve), a pipe fitting or pipe section and indeed any other component (not necessarily being a valve or pipe component) requiring a surface liner securely fixed to a metal substrate.

## Claims

1. A method of lining an internal surface of a valve or pipe component comprising the steps of applying an atomised spray of sintered metal to the internal surface to be lined forming a sintered metal coating having exposed interstices and then applying to said coating a chemically inert lining material under conditions of heat and pressure such that the material is caused to penetrate said interstices so as to provide a mechanical key therefore.

2. A method as claimed in claim 1, wherein the sintered metal is nickel, bronze, steel or stainless steel.

3. A method as claimed in claim 1 or claim 2, wherein the lining material is applied by a transfer, injection or isostatic moulding technique.

4. A method as claimed in any one of claims 1 to 3, wherein the lining material is PFA or FEP.

## Patentansprüche

1. Verfahren zum Auskleiden einer Innenfläche einer Ventil- oder Rohrkomponente, mit den folgenden Schritten: Aufbringen eines zerstäubten Sprühnebels aus Sintermetall auf die auszukleidende Innenfläche und Ausbilden eines Sintermetallüberzugs mit freiliegenden Zwischonräumen, und anschließendes Aufbringen eines chemisch inerten Auskleidungsmaterials auf den Überzug unter Hitze- und Druckeinwirkung, so daß das Material in die Zwischenräume eindringt, um einen mechanischen Keil dafür zu bilden.

2. Verfahren nach Anspruch 1, wobei das Sintermetall Nickel, Bronze, Stahl oder rostfreier Stahl ist.

3. Verfahren nach Anspruch 1 oder Anspruch 2, wobei das Auskleidungsmaterial durch ein Übertragungs-, Einspritz- oder isostatisches Preßverfahren aufgebracht wird

4. Verfahren nach einem der Ansprüche 1 bis 3, wobei das Auskleidungsmaterial PFA oder FEP ist.

## Revendications

1. Procédé de rovêtement d'une surface interne d'un composant de vanne ou de tuyau comprenant les étapes d'application d'une pulvérisation atomisée de métal fritté à la surface interne devant être revêtue, de formation d'une couche de métal fritté comportant des interstices exposés avant l'application à ladite couche d'un matériau de revêtement chimiquement inerte dans des conditions de chaleur et de pression telles que le matériau est entraîné à pénétrer dans lesdits interstices, de sorte à assurer une fixation mécanique correspondante.

2. Procédé selon la revendication 1, dans lequel le métal fritté est du nickel, du bronzes de l'acier ou de l'acier inoxydable.

3. Procédé selon les revendications 1 ou 2, dans lequel le matériau de revêtement est appliqué par une technique de moulage par transfert, par injection ou isostatique.

4. Procédé selon l'une quelconque des revendications 1 à 3, dans lequel le matériau de revetement est du PFA ou du FEP.
